# EUROPÄISCHE PATENTSCHRIFT

(11) **EP 3 998 226 B1**
(45) Veröffentlichungstag und Bekanntmachung des Hinweises auf die Patenterteilung: **29.01.2025**
(21) Anmeldenummer: 20837564.2
(22) Anmeldetag: 08.07.2020
(51) Int. Cl.: B67D 1/04, G01F 11/32, B67D 1/08, B67D 1/14, G01F 15/00

(54) **DOSIERVERSCHLUSSDECKEL FÜR EINEN BEHÄLTER ZUM AUFBEWAHREN UND AUSGEBEN EINES KOHLENSÄUREHALTIGEN GETRÄNKS**
METERING CLOSURE CAP FOR A CONTAINER FOR STORING AND DISPENSING A CARBONATED BEVERAGE
SONDE DE DOSAGE DE RÉCIPIENT POUR STOCKER ET DISTRIBUER UNE BOISSON GAZÉIFIÉE

(30) Priorität: 09.07.2019 EA 201900451
(43) Veröffentlichungstag der Anmeldung: 18.05.2022
(73) Patentinhaber: LLC "SodaStream", 212004 Mogilev (BY)
(72) Erfinder: GONTCHAROV, Stanislav Sergeevitch, 220035 Minsk (BY)
(74) Vertreter: Jeck, Jonathan
(86) Internationale Anmeldenummer: PCT/EA2020/000002
(87) Internationale Veröffentlichungsnummer: WO 2021/004596

(56) Entgegenhaltungen:
- EP-A2- 1 754 542
- WO-A1-2014/184597
- CN-A- 110 160 079
- EA-B1- 020 436
- EA-B1- 020 436
- FR-A1- 2 862 620
- SU-A3- 1 535 375
- US-A- 4 660 748
- US-A- 6 036 170
- US-B1- 6 253 965
- US-B1- 7 318 431

## Beschreibung

Die Erfindung betrifft Spenderstopfen für Vorrichtungen zur Lagerung und Abgabe von Flüssigkeiten, gemäß Anspruch 1 die unter Gasdruck stehen. Das sind in erster Linie stark kohlensäurehaltige Getränke oder natürlich vergorene Nalitos. Die Getränke sind in Einwegplastikbehältern verpackt, hauptsächlich in PET-Flaschen mit dem Halstyp PC018S1, PC018U.

Es ist ein Füllsiphon für kohlensäurehaltige Getränke bekannt, der einen Behälter mit einem Siphonrohr und einem Hahn enthält. Die Armatur ist mit einem Auslauf ausgestattet. Der Siphon enthält außerdem ein federbelastetes Ventil und einen Hebel zur Einstellung der Durchflussmenge [1]. Der Füllsiphon wird über den Auslauf mit einem Druck von 4 bis 8 Atmosphären mit kohlensäurehaltigem Getränk gefüllt. Der Vorteil eines Siphons besteht in der Möglichkeit, das Getränk darin aufzubewahren und zu konsumieren, ein Getränk mit einem höheren Gasgehalt als ein Behälter ohne Ventilverschluss zulässt. Dadurch wird die Attraktivität des Getränks erhöht und ein Verzicht auf Konservierungsstoffe ermöglicht. Gleichzeitig wird auch die Verpackung von kohlensäurehaltigen Getränken auf der Basis von natürlichen Säften ermöglicht.

Aus der FR 03 13759 ist ein Set (1). Es besteht aus einem Behälter mit einem Ausgabecoil (9) und einer Vorrichtung (5) zum Verschließen des Behälters. Die Verschlussvorrichtung besteht aus einer Kappe (33) und einem Originalitätsring (35). Die Abgabevorrichtung (9) umfasst Anschläge (21), an denen die Elemente der Abgabevorrichtung (9) des Rings beim Abschrauben des Stopfens (33) anliegen, um den Ring (35) in der Drehung zu blockieren. Der Ring (35) umfasst mindestens einen Vorsprung (45), der dazu bestimmt ist, mit einem Halteelement (22) des Halses (9) in Eingriff zu kommen, damit es den Originalitätsring (35) in Längsrichtung auf dem Verteilerkreis festhält. (9) - zu halten.

Anwendung auf die Verpackung und Verteilung von Medikamenten zur oralen Verabreichung.

Die EP 1 754 542 A2 lehrt eine Airless-Spender-Pumpenanordnung (30) umfassend einen Pumpmechanismus mit einem Einlassventil (57), das so konfiguriert ist, dass es viskose Flüssigkeiten effizient pumpen kann, und das vorgesaugt werden kann, wenn der Pumpenmechanismus an einem Behälter angebracht wird. In einer Form umfasst das Einlassventil ein Dichtungselement, das eine Einlassöffnung der Pumpe abdichtet, und ein äußeres Halteelement, dass das Einlassventil mit dem Rest des Pumpenmechanismus verbindet. Zwei oder mehr Schenkel (88) erstrecken sich im Allgemeinen in Umfangsrichtung zwischen dem Stützglied und dem Dichtungsglied, um um eine große Durchflussöffnung für den Flüssigkeitsstrom durch das Einlassventil zu schaffen und das Einlassventil schnell zu schließen. Der Pumpmechanismus umfasst ferner ein Auslassventil (64), das so konfiguriert ist, dass es nach der Düse der Pumpe nach der Abgabe zurückzieht, um die um die Düse herum zu minimieren.

Aus der US 6 253 965 B1 in eine Verbesserung an Ventilköpfen für Softdrinkflaschen und dergleichen bekannt, die mit dem Hals einer kohlensäurehaltigen Flasche verbunden werden können die kohlensäurehaltige Flüssigkeit enthält, mit einem Ventilkörper, der von einem Flüssigkeitszirkulationskanal durchquert wird, der eine äußere mit dem inneren Auslass eines Tauchrohrs, das im Inneren der Flasche endet der Flasche endet, ein Rückschlagventil, das im Zirkulationskanal montiert ein Rückschlagventil, das im Zirkulationskanal montiert ist und einen normalerweise geschlossenen Ventilblocker aufweist, dessen Heck dessen Heck eine Gleitführung im oberen Teil des Ventilkörpers aufweist Ventilkörpers eine Gleitführung aufweist; die Verbesserungen umfassen eine Abdeckhaube mit im wesentlichen kegelstumpfförmig ist, ein Steuerelement Befehlselement, das einen zweiten Gattungshebel bildet, ein abnehmbares Band, das ein abnehmbares Band, das ein Faltband für den klappbaren Gelenkarm bildet, eine Öffnung, die einen Durchgang für den äußeren Ausguss bildet, und ein Verbindungselement zwischen der Haube und dem Ventilkörper.

Die US 6 036 170 A lehrt Verbesserungen an Serviceventilköpfen, die an die an Erfrischungsgetränkeflaschen oder dergleichen angeschlossen werden können, wobei ein Ventilkörper erhalten wird, wobei ein Flüssigkeitszirkulationskanal zwischen der Tülle und dem Spülrohr vorgesehen ist, wobei der Kanal ein Rückschlagventil aufweist. Die Stange des Ventils wird durch ein Steuermittel betätigt, dessen Gelenkarm über den Ventilkörper klappbar ist, mit Klappanschlägen und einem mit einer Halterung versehenen Band. Die Klappanschläge des Ventilkörpers und die entsprechenden Aussparungen des Gelenkarms verhindern, dass dieser durch irgendeinen unbeabsichtigten Druck abgesenkt wird, wodurch die Ventilstange verschoben und eine unerwünschte Flüssigkeitsabgabe verursacht würde. Für die Abgabe der kohlensäurehaltigen Flüssigkeit muss zunächst die Klapplasche gelöst werden. Auf diese Weise kann der Gelenkarm ausgeklappt werden, bis er sich durch den an den Kopfwänden vorhandenen Steuerkanal verschiebt.

Durch die Neuausrichtung des Marktes auf Einwegbehälter ist der Mehrweg-Siphon in Ungnade gefallen. Er wurde durch billige und technologisch fortschrittliche Einwegplastikprodukte ersetzt, zum Beispiel durch PET-Flaschen mit großem Fassungsvermögen (bis zu 2,5 Litern). In diesen Behältern lassen sich stark kohlensäurehaltige Getränke aufbewahren. Der Nachteil dieser Flaschen, insbesondere der Flaschen mit großem Fassungsvermögen, ist, dass beim Öffnen des Korkens der größte Teil des Gases entweicht und das Getränk dadurch an Qualität verliert.

Die Spenderkappe gibt das Getränk gleichmäßig ab und sorgt für einen hohen Grad an Kohlensäure. Der Korken ist so konzipiert, dass er in einem breiten Druckbereich von 0,5 bis 10 atm funktioniert. Er muss eine hohe Durchflusskapazität haben. Deshalb war man früher der Meinung, dass der Korken nicht in kompakter Größe hergestellt werden kann und nur für eine umfangreiche industrielle Produktion ausgelegt sein kann. Gleichzeitig kann es nicht preiswert genug für den einmaligen Gebrauch und auch für den Verkauf in Einzelhandelsgeschäften ohne weitere Sammlung von gebrauchten Behältern und deren Wiederbefüllung sein.

Ein Behältersystem zur Aufbewahrung und Ausgabe eines gesättigten Getränks und eine Füllvorrichtung dafür sind bekannt [2]. Es enthält einen Behälter mit einer Kehle, an dessen Innenwand ein Ventilelement angebracht ist. An der Außenwand ist ein Gewinde für eine lösbare Befestigung des Dosierkopfes angebracht. Der Behälter ist mit einem Siphonrohr und einer abnehmbaren Sicherheitskappe ausgestattet. Der Behälter ist aus unzerbrechlichem Kunststoff gefertigt. Durch den Einbau eines Ventilelements in den Behälterhals wird der Befüllvorgang etwas vereinfacht, denn der Vorgang ist aufgrund der Form des Dosierkopfes, in dem sich normalerweise das Ventil befindet, recht umständlich. Die abnehmbare Befestigung des Schankkopfes ermöglicht ein zweiteiliges System: einen austauschbaren Getränkebehälter und eine abnehmbare Schankanlage. Dadurch ist es möglich, einen Getränkebehälter anzubringen. Der Tank ist für den einmaligen Gebrauch bestimmt. Der Spender ist zwar teurer, kann aber mehrfach verwendet werden.

Der Nachteil dieses Konzepts besteht darin, dass das Spendersystem im Vergleich zum Behälter - einer einzelnen Kunststoffflasche - immer noch ein komplexer und kostspieliger Teil des Systems ist, und die Konjunktur verlangt das umgekehrte Verhältnis. Flaschen mit der bekannten Entnahmevorrichtung lassen sich auf herkömmlichen PET-Verpackungsanlagen nur schwer herstellen. Stapeln Sie auch mehrere Reihen übereinander in Paletten. Die Konstruktion des Spenders lässt dies nicht zu. Ein Behälter mit einem solchen Ventilelement ist zu komplex. Es ist mit herkömmlichen Einwegbehältern nicht wettbewerbsfähig. Beim Befüllen eines solchen Behälters kommt das Getränk mit Luft in Kontakt. Es gibt auch keine Technologie, die das System gegen die Möglichkeit des Nachfüllens schützt.

Am nächsten der vorliegenden Erfindung, was die technische Beschaffenheit und das erzielte Ergebnis angeht, kommt der als Prototyp gewählte Behälter für kohlensäurehaltige Getränke. Der Behälter umfasst ein Gehäuse. Am Hals des Gehäuses [3 - Prototyp] ist ein Stopfen-Ventil zur Aufbewahrung und Abgabe von kohlensäurehaltigen Getränken aus dem Behälter angebracht. Er umfasst einen Bodenkörper mit einer Innenfläche zur Abdichtung am Hals des Behälters. In diesem Gehäuse ist eine Ventilvorrichtung mit einem Rohr installiert. Das Rohr erreicht den Boden des Gefäßes. Außerdem gibt es einen Oberkörper mit einem Steuerhebel. Der zweiteilige Betätigungshebel des Steckers ist klappbar ausgeführt. Die Ventilvorrichtung hat die Form eines Sitzventils. Es interagiert mit dem Sitz. Der Sitz ist im unteren Gehäuse angebracht. Der Ventilschaft ist in der Bohrung des zweiteiligen Klapphebels befestigt. Der Hebel ist gelenkig mit dem Oberkörper verbunden, und die Hebelteile sind gelenkig miteinander verbunden. Auf dem Hebel ist ein elastisches, federndes Element angebracht. Das obere Gehäuse ist mit Anschlägen versehen, die verhindern, dass der Hebel in der geschlossenen Position niedergedrückt wird. Außerdem ist ein Riegel angebracht, der den Hebel in der eingeklappten Stellung hält.

Die Ventilplatte ist aus elastischem, weichem Material gefertigt. Das Scharnier des zweiteiligen klappbaren Steuerhebels und das Scharnier zur Befestigung des Hebels am oberen Gehäuse sind aus Kunststoff geformt, zusammen mit den Hebelteilen und dem Gehäuse. Auf der unteren Ebene des Steuerhebels ist ein federndes Element in Form von mindestens einer federnden Stange eingegossen.

Ein Nachteil des bekannten Geräts ist seine relativ komplizierte Konstruktion. Sie erfordert eine Reihe von Montagevorgängen. Außerdem gibt es keine Möglichkeit, unbefugte Manipulationen zu verhindern.

Es ist Aufgabe der Erfindung, Einweg-PET-Flaschen mit einem preiswerten und einfachen Spenderverschluss zu versehen. Der Korken soll dafür sorgen, dass das kohlensäurehaltige Getränk effizient ausgeschenkt wird, bis die gesamte Flasche leer ist. Ein neuer Spenderstopfen sollte nicht viel größer sein als ein bekannter Korken, damit sichergestellt wird, dass Standardflaschen auf herkömmlichen PET-Abfüllanlagen auch mit den neuen Spenderkorken verschlossen werden können. Dies kann mit denselben speziellen Verschließmaschinen geschehen. Sie werden in der Leitung nach der Abfüllanlage installiert.

Das Problem wird wie folgt gelöst: Die Spenderkappe zur Aufbewahrung und Ausgabe von kohlensäurehaltigen Getränken aus einem Behälter umfasst ein Bodengehäuse. Der Behälter ist mit einer Ausgusstülle versehen. Die Form der Innenfläche des unteren Gehäuse Teils ist so gewählt, dass die Kappe hermetisch auf dem Hals des Behälters befestigt werden kann. Der Oberkörper ist so geformt, dass er mit dem Unterkörper verbunden und fixiert werden kann. Er ist mit einem Steuerhebel ausgestattet. Die Ventileinrichtung ist so konzipiert, dass sie die Dichtheit des Behälters gewährleistet. Der Stecker enthält außerdem ein Rohr. Er ist mit dem unteren Teil des Gehäuses des Spendersteckers verbunden. Der Bedienhebel ist als zweiteiliger Klapphebel ausgeführt. Die Ventilvorrichtung enthält ein Sitzventil und ist mit einem Sitz verbunden. Der Sitz ist im unteren Gehäuse untergebracht. Ein Ventilschaft ist an einer Bohrung des zweiteiligen Klapparms angelenkt. Er ist mit dem oberen Gehäuse gelenkig verbunden.

Die Hebelteile sind gelenkig miteinander verbunden. Auf dem Hebel befindet sich ein rückstellbares elastisches Element. Das obere Gehäuse ist mit Anschlägen versehen. wodurch verhindert wird, dass der Hebel in der eingeklappten Stellung gedrückt wird. Weiter ist eine Verriegelung installiert, die den Hebel in der eingeklappten Position hält.

Die vorgeschlagene Lösung sieht vor, dass der untere Teil des Dosierkolbens mit einem Kontrollring ausgestattet ist. Das Ende des Gehäuses und das Ende des Rings sind miteinander verbunden, und zwar durch zwei Brücken mit gelockerten Bändern. Die Anschlüsse sind parallel. Sie sind entlang der Achse des Dosierstopfens ausgerichtet. Einige der Streifen werden durch das Herausdrehen beim Öffnen des Dosiersteckers zerstört.

Ein Flip-Top-Deckel oder ein anderer geeigneter Deckeltyp wird am Ablassventilstutzen befestigt. Er soll vor dem Eindringen von Staub während des Transports und der Lagerung schützen. Das untere Gehäuse ist zusätzlich mit mindestens einem Zahn ausgestattet. Der Zahn ist so konstruiert, dass er die Spenderkappe mit einem Verschlussring blockiert, wenn sie aufgeschraubt wird. Dadurch wird verhindert, dass die Brücken zwischen dem Ring und dem unteren Gehäuse ungewollt zusammenbrechen.

Der Hebel des oberen Körpers des Korkenspenders ist mit einem federnden Element ausgestattet, das die Form von zwei flexiblen Ranken hat. Die Ranken befinden sich auf beiden Seiten der Ventilvorrichtung. Der Hebel ist mit dem oberen Gehäuse durch ein einziges Glied mit einer lockeren Stange verbunden. Der Hebel, wird benötigt, um den Hebeldruck zu kontrollieren.

Auf beiden Seiten der Ventileinrichtung am Unterteil des Dosierkegels befinden sich Führungen. Jede von ihnen ist in Form eines Kanals ausgeführt. Die Form des Querschnitts entspricht derjenigen des flexiblen Spannglieds. Der Führungskanal befindet sich an der Stirnseite des zylindrischen Rohrs mit variabler Höhe. Er ist entlang der Achse des Steckers ausgerichtet. Die Höhe schwankt zwischen dem Höchstwert zu Beginn der Montagearbeiten und dem Mindestwert am Ende der Montagearbeiten.

Beim Zusammenbau des Dosiersteckers kann die Reihenfolge wie folgt aussehen. Der Installateur nimmt das Ober- und Unterteil des Dosierers und richtet die Laschen des oberen Gehäuses an den entsprechenden Führungen des unteren Gehäuses aus. Er bewegt dann beide Gehäuse aufeinander zu, bis ein doppeltes Klicken zu hören ist. Dies geschieht, wenn das Paar ringförmiger Laschen am unteren Gehäuse mit dem Paar ringförmiger Nuten am oberen Gehäuse ausgerichtet ist. Dann nimmt er das Tellerventil und führt die Spindel in den zentralen Hohlraum des Dosierkegels ein und schiebt ihn entlang der Achse des Hohlraums bis zum Anschlag in den Klapphebel. Dann richtet er die Stange mit dem Loch im Hebel aus. Die am Ende der Stange angebrachte Bördelung muss in das besagte Loch eindringen und es mit Kraft durchstoßen. Dadurch wird der Ventilschaft sicher in die Bohrung des zweiteiligen Klapphebels geklemmt. Der Installateur führt dann das Rohr in das zylindrische Loch ein. Dieses befindet sich im unteren Gehäuse. Der Stecker ist einbaufertig.

Es ist wichtig, dass die Scheibe und der Schaft des Tellerventils aus weichem, elastischem Material bestehen. Sie sind aus einem einzigen Stück gefertigt. Das Scharnier des zweiteiligen Klappsteuerhebels und das Scharnier zur Befestigung des Hebels am oberen Gehäuse sind gegossen. Die Scharniere sind aus einem Stück mit den Hebelteilen bzw. dem Gehäuse gefertigt. Durch diese Konstruktion der Stopfenteile und des Stopfens als Ganzes können die Abmessungen des Ventils erheblich reduziert werden.

Durch die Konstruktion des elastischen Federelements in Form von Kunststoffspiralen wird die Verwendung von Federteilen vermieden, die aus Stahl oder anderen Metallen gefertigt sind, und die Reduzierung der axialen Abmessungen des Kegelventils ermöglicht. Die Produktionskosten sind niedriger. Die Einhaltung von Umweltauflagen wird erheblich verbessert. Die Ausführung des Ventilkopfes aus weichelastischem Material, z. B. thermoplastischem Elastomer, ermöglicht es, die konisch geformte Stirnfläche des inneren Teils des Bodengehäuses als Ventilsitz zu verwenden.

Das weiche Material sorgt für Dichtigkeit. Elastisch - stellt zuverlässig die ursprüngliche Form des Tellerventils wieder her, wenn die Last entlastet wird. und auch die Verriegelung des Ventils, wenn es in die geschlossene Position zurückkehrt. Der Schließzustand des Ventils wird zunächst durch ein elastisches, einziehbares Element in der geschlossenen Position gehalten. Dies wird durch Einwirkung auf den Hebel erreicht. Darüber hinaus wird der Ausgabekanal des Behälters für kohlensäurehaltige Getränke durch das Ventil verschlossen. Dieses wird durch den Gasdruck im Inneren des Tanks aktiviert, der auf das Sitzventil wirkt. Kohlendioxid wird hauptsächlich als Gas für kohlensäurehaltige Getränke verwendet. In besonderen Fällen werden jedoch auch andere Gase wie Sauerstoff, Distickstoffoxid oder deren Mischungen verwendet. Auch Gasgemische aus der natürlichen Gärung von alkoholischen, alkoholarmen und Sauermilchgetränken werden verwendet.

Das Scharnier des zweiteiligen klappbaren Steuerhebels und das Scharnier zur Befestigung des Hebels am oberen Gehäuse sind zusammen mit den Gehäuseteilen und den Hebeln aus geformtem Kunststoff hergestellt. Auf diese Weise lassen sich relativ einfache Verbindungen zu geringen Kosten herstellen. Sie sind für eine begrenzte Anzahl von Druckvorgängen geeignet.

Die Praxis zeigt, dass ein solches Scharnier problemlos ein oder zwei Dutzend Faltungen aushält. Bei Einwegbehältern ist eine lange Haltbarkeit nicht erforderlich. Das elastische Rückstellelement wird in Form eines Rankenpaares auf der unteren Ebene des Hebels durch Gießen hergestellt. Dadurch kann der Hebel und damit auch der Ventilkegel in die Stellung "Geschlossen" zurückkehren. Es bedarf dafür keiner großen Kraft, um sie zurückzugeben. Da der Kanal nach dem Verschließen zuverlässig geschlossen ist. Der Kanal wird durch ein Ventil unter Gasdruck aus dem Inneren des Behälters geschlossen.

Die Erfindung wird nun anhand der Zeichnungen näher erläutert. Es zeigen:

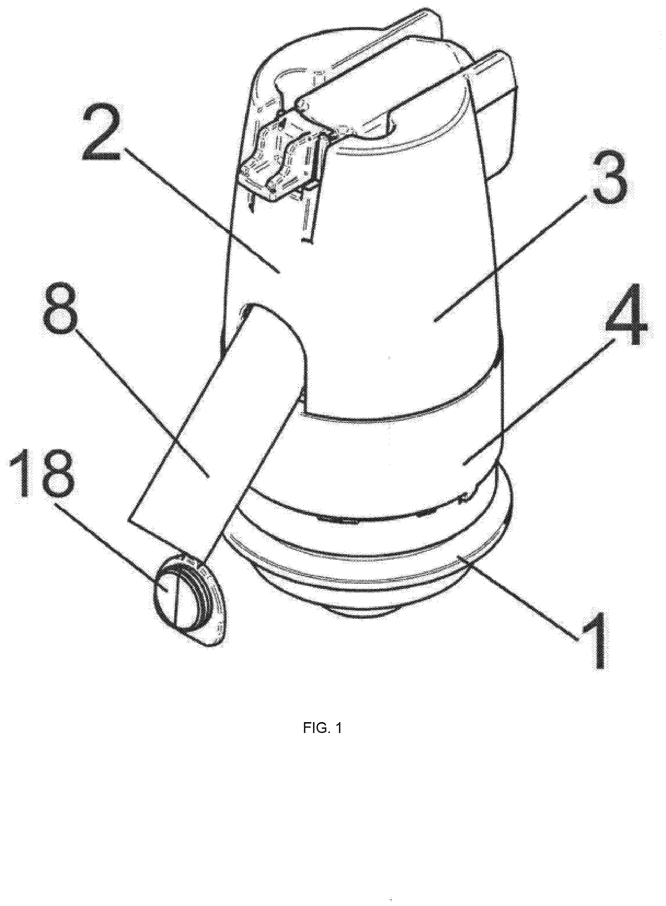

- Fig. 1: den Abgabestecker in Gesamtansicht mit geschlossenem Getränke-steuerungshebel und offener Kappe auf dem Auslauf des unteren Gehäuses,

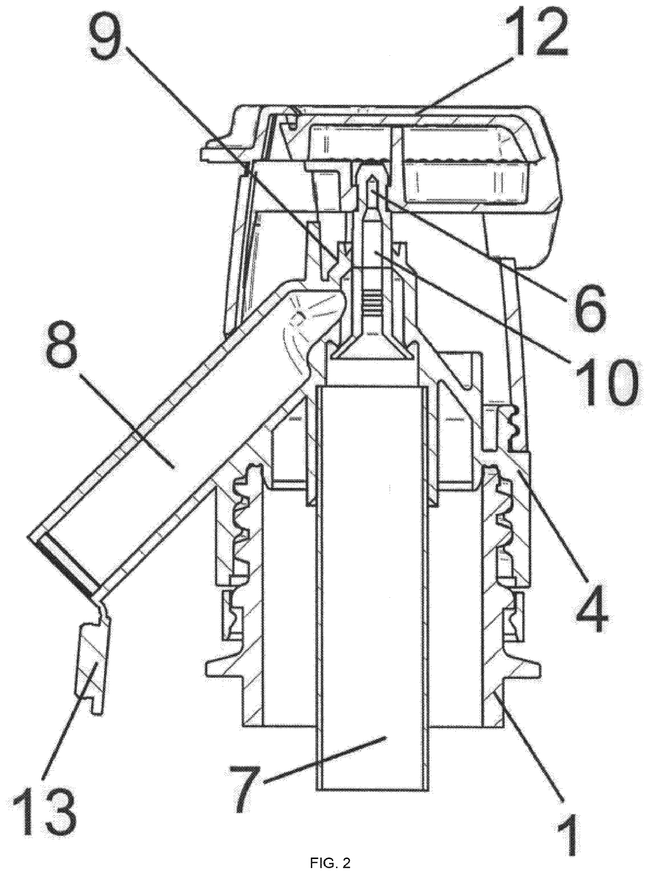

- Fig. 2: den Abgabestecker im Schnitt mit geschlossenem Hebel,

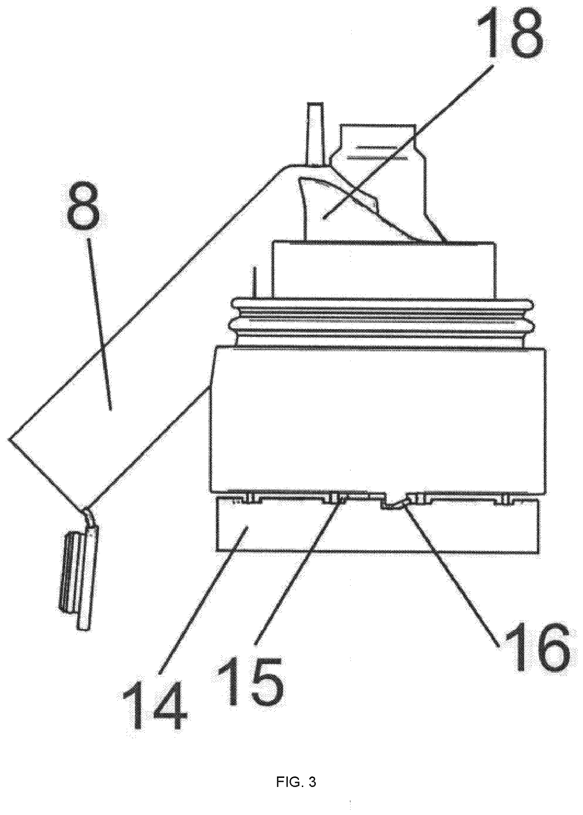

- Fig. 3: den unteren Teil der Dosierschnecke in Seitenansicht,

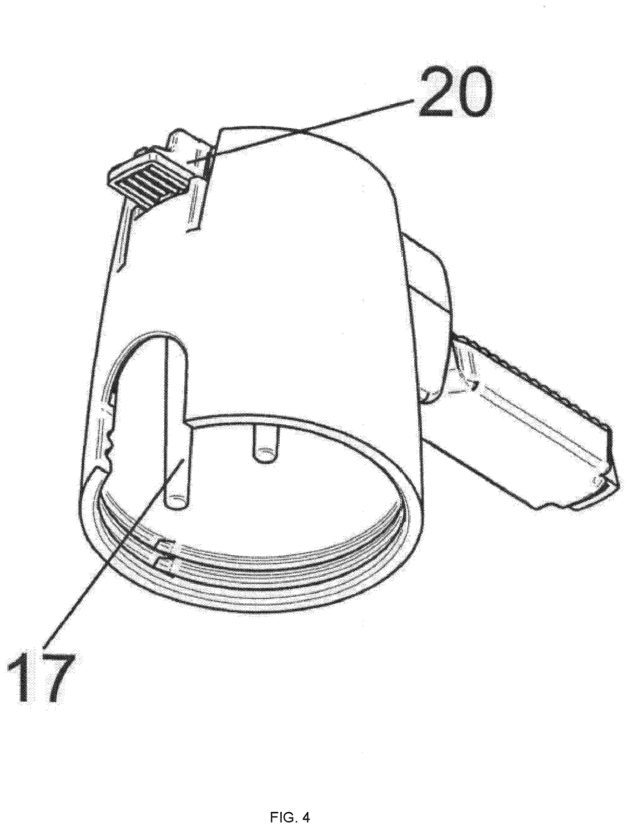

- Fig. 4: den oberen Teil des Spenderverschlusses mit dem offenen Getränkesteuerungshebe in Gesamtansicht von unten,

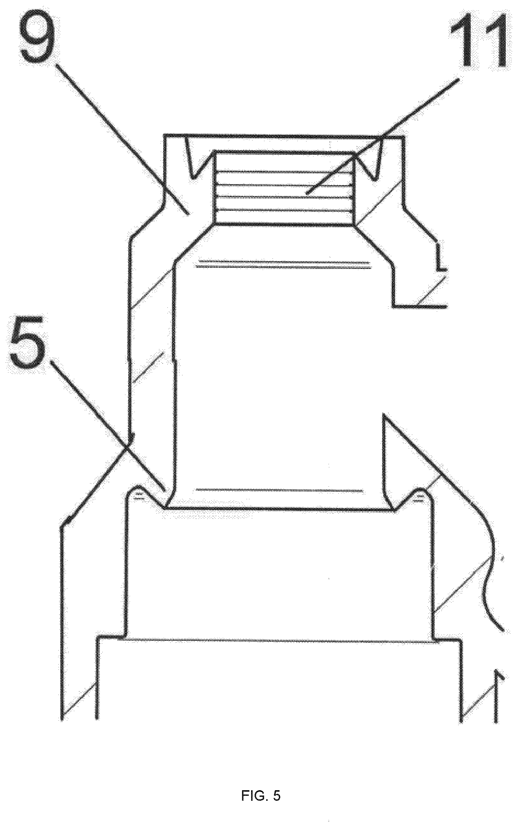

- Fig. 5: den oberen Teil des unteren Gehäuses mit den speziellen Kerben und dem Tellerventilsitz in Schnittdarstellung,

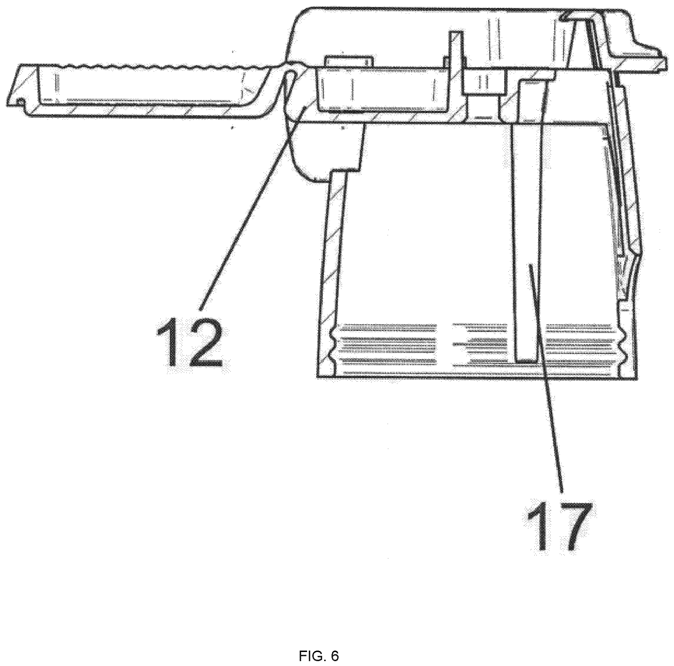

- Fig. 6: den Abgabestecker des oberen Gehäuses mit geöffnetem Getränke-steuerungshebel in Schnittansicht,

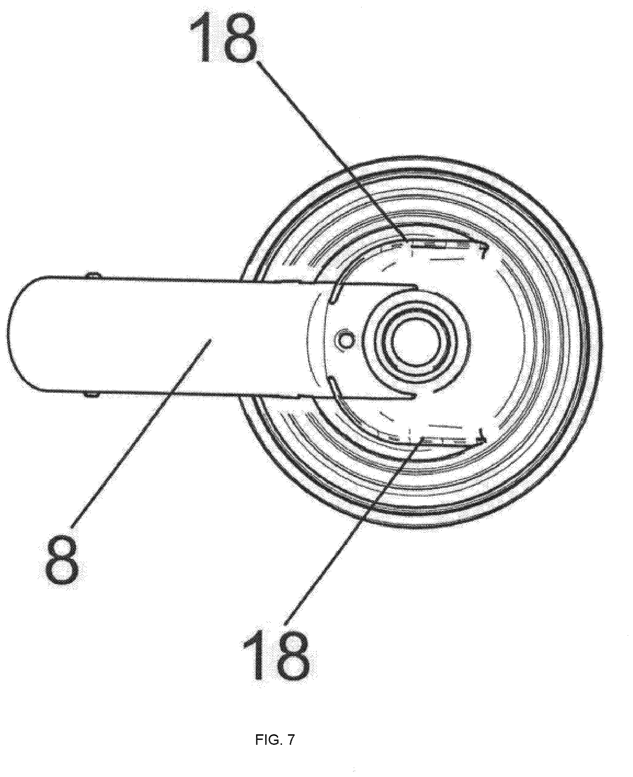

- Fig. 7: das untere Gehäuse der Dosierschraube in Draufsicht,

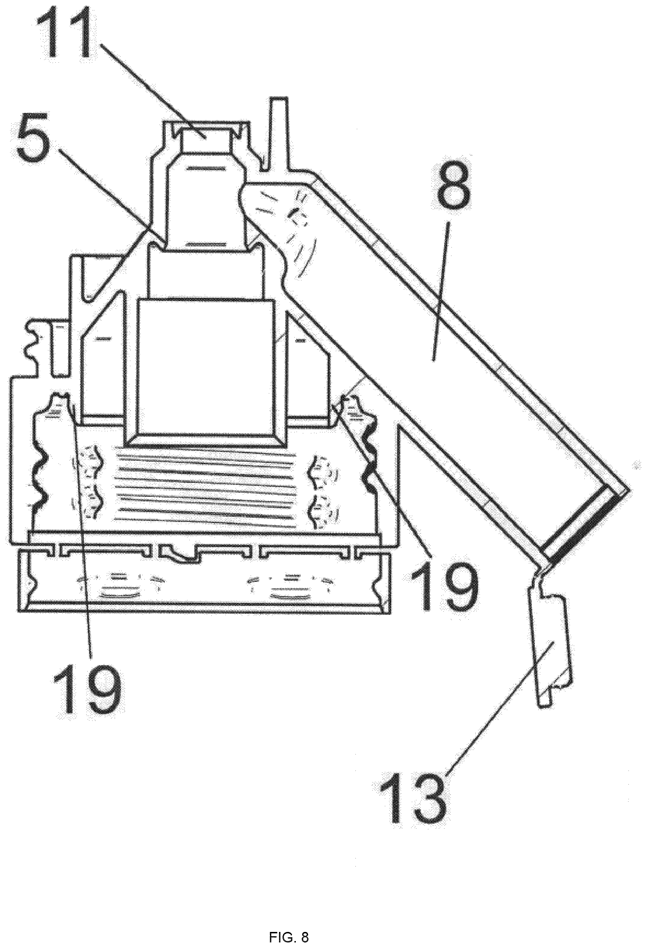

- Fig. 8: das untere Gehäuse der Dosierschraube in Schnittdarstellung,

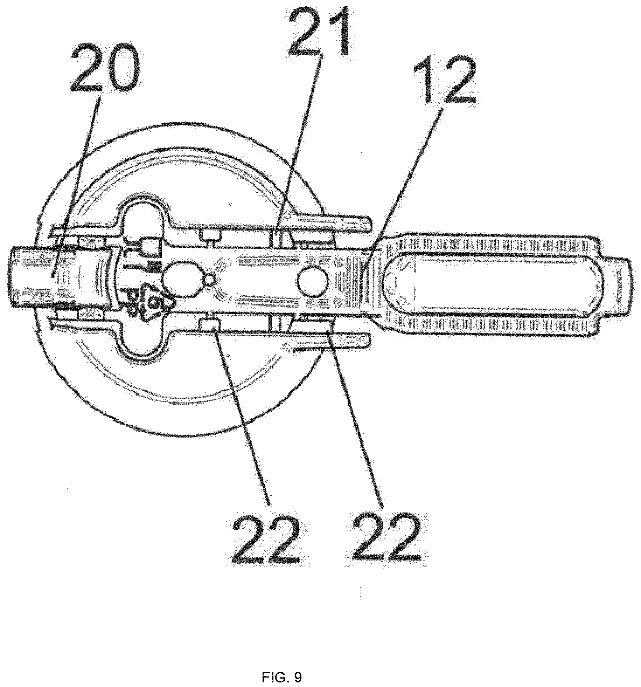

- Fig. 9: das obere Gehäuse des Dispensers in Schnittdarstellung der Seitenansicht und
- Fig. 10: eine schematische Darstellung der Verwendung des Spendersteckers.

In den Figuren der Zeichnungen ist am Flaschenhals 1 eine Spenderkappe 2 hermetisch befestigt. Er wird für die Lagerung und Ausgabe von kohlensäurehaltigen Getränken benötigt. Die Teile können durch Verschraubung, Bördeln, Pressen, Kleben oder jede andere bekannte Methode miteinander verbunden werden. Der Dosierkegel 2 wird durch das obere Gehäuse 3 und das untere Gehäuse 4 gebildet. Die Außenseite des unteren Gehäuses 4 dient der Befestigung der Dosierkappe 2 auf dem Hals der Flasche 1. Die Dichtheit wird durch Watte erreicht. Im Inneren des unteren Gehäuses 4 befindet sich der Sitz 5 des Sitzventils 6. In der zylindrischen Öffnung des unteren Gehäuses 4 des Dosierkolbens 2 wird ein Rohr 7 nach bekannten Methoden befestigt. Die zylindrische Öffnung reicht praktisch bis zum Boden der Flasche 1. Sie sorgt für den nötigen Freiraum bei der Flüssigkeitsabgabe.

Im unteren Gehäuse 4 befindet sich ein Ablassstutzen 8 zum Ablassen der Flüssigkeit. Außerdem gibt es eine Führung 9, die den Schaft 10 des Tellerventils 6 hält. Die Innenseite der Führung 9 ist mit speziellen Einkerbungen 11 versehen, um die Dichtheit des Gefäßes in diesem Bereich zu verbessern.

Der obere Körper 3 des Dispensers 2 wird auf jede bekannte Weise, z. B. durch Aufpressen, auf dem unteren Körper 4 befestigt. Das obere Gehäuse 3 ist als Kappe ausgeführt. Im zusammengeklappten Zustand trägt der Körper einen zweiteiligen Steuerhebel 12. Ein Ende des Steuerhebels 12 ist an der Oberfläche des oberen Gehäuses 3 angelenkt. Das andere Ende des Hebels ist frei.Es ist mit einem Scharnier zum Ausklappen des Steuerhebels 12 ausgestattet. Ein federndes Rückstellelement ist vorgesehen, um den Steuerhebel 12 in seine obere Stellung zurückzubringen. Er wird in Form von Verstärkungsarmen durch Spritzgießen zusammen mit anderen Teilen des oberen Gehäuses 3 hergestellt.

In den Steuerhebel 12 wird ein Loch gebohrt. Der obere Teil des Stifts 10 des Tellerventils 6 wird durch das Loch geführt. Die untere Ebene des Hebels 12 liegt auf der Schulter des Schaftes auf. Am Ende des Stifts 10 befindet sich eine Aufweitung. Dadurch wird sichergestellt, dass das Ventil 6 zurückgestellt wird, wenn der Hebel 12 angehoben wird und die Palette des Tellerventils 6 gegen den Sitz 5 vordrückt. Auf dem Ablassstutzen 8 des Ventils 6 ist ein beliebiger, geeigneter Deckel 13, z. B. ein Klappdeckel, angebracht. Dies ist besonders wichtig, wenn Flaschen transportiert oder gelagert werden, da die Oberseite des Korkens erheblichen Belastungen ausgesetzt sein kann und auch um zu verhindern, dass Schutt, Staub und Schmutz ins Innere gelangen.

Gemäß der vorgeschlagenen Lösung ist das untere Gehäuse 4 des Dosierstopfens mit einem Steuerring 14 ausgestattet. Die Enden des unteren Körpers 4 und des Rings 14 sind durch vier Querstreben 15 miteinander verbunden. Sie sind parallel und entlang der Achse des Steckers ausgerichtet. Die Brücken enthalten gelockerte Querstreifen. Einige der Streifen werden zerstört, wenn der Stecker durch Abschrauben geöffnet wird. Damit wird die Aufgabe gelöst, das Öffnen des auf einem Behälter angebrachten Spenderstopfens vor dem Verkauf an den Verbraucher zu kontrollieren.

Das untere Gehäuse 4 ist zusätzlich mit einem Zahn 16 ausgestattet. Der Zahn blockiert die Trennung zwischen dem unteren Körper 4 und dem Steuerring 14. Dies geschieht beim Verschließen des Spenderstopfens auf manuellen, halbautomatischen oder automatischen Verschließmaschinen. Die Verzahnung verhindert auch ein ungewolltes Abbrechen der Zwischenstücke zwischen dem Steuerring 14 und dem Unterteil 4.

Die oberen Kegelkörper 3 und die unteren Kegelkörper 4 sind mit Teilen zur Befestigung der Kegelkörper gegenüber der Ventilvorrichtung ausgestattet. Die elastischen Federelemente des oberen Kegelkörpers 3 haben die Form von zwei flexiblen Spanngliedern 17, die sich auf beiden Seiten der Ventilvorrichtung befinden. Am unteren Körper 4 des Kegels befinden sich auf beiden Seiten der Ventilvorrichtung rohrförmige Führungen 18. Jede Führung hat die Form eines Kanals, der im Querschnitt der Querschnittsform der flexiblen Ranken 17 entspricht. Jeder Kanal befindet sich an der Endfläche eines zylindrischen Rohrwandabschnitts mit variabler Höhe, der entlang der Achse des Stopfens ausgerichtet ist. Die Höhe variiert stufenlos von einem Maximalwert an der Stelle, an der die Ranken in die rohrförmigen Führungen eingeführt werden, bis zu einem Minimalwert an der Stelle, an der sie austreten.

Die Dichtheit zwischen dem Flaschenhals und dem Flaschenverschluss wird durch die Watte 19 erreicht. Im oberen Gehäuse 3 befindet sich eine Verriegelung 20. Sie verhindert ein ungewolltes Kippen des Bedienhebels 12. Die Verriegelung ist so konstruiert, dass der Hebel in der Position "geschlossen" bleibt. Sie verhindert auch, dass der Hebel beim Verschließen mit einem Dosierkorken spontan in die Stellung "offen" kippt, auch beim Transport der fertigen Produkte zum Endverbraucher. Die Verriegelung ist außerdem mit einer Manipulationssicherung ausgestattet. Die Funktion der Manipulationssicherung wird ebenfalls von den Brücken 21 übernommen. Diese befinden sich auf der Oberseite des Gehäuses. Nach der ersten Betätigung des Hebels klappen die Jumper zusammen. Das obere Gehäuse 3 an den Seiten des Hebels 12 ist mit Anschlägen 22 versehen. Sie verhindern, dass sich der klappbare Teil des Steuerhebels 12 im eingeklappten Zustand nach unten bewegt und das Ventil 6 öffnet. Dies ermöglicht es, das fertige Produkt in Paletten mit 5 oder mehr Reihen zu stapeln und geschieht, ohne dass die Dichtigkeit des Dosierstopfens verloren geht und er bei Transport und Lagerung spontan zusam menfäl lt.

Wichtig ist, dass die Palette und der Ventilschaft aus einem einzigen Stück gespritzt werden. Sie sind aus einem elastischen, weichen Material gefertigt. Das Scharnier des zweiteiligen Klappsteuerhebels und das Scharnier zur Befestigung des Hebels am oberen Gehäuse sind spritzgegossen. Die Gelenke werden zusammen mit dem Gehäuse und den Hebelteilen hergestellt und auch das elastische Rückstellelement in Form eines Rankenpaares sowie andere Teile des oberen Gehäuses 3.

Diese Konstruktion des gesamten Dosierkegels reduziert die Größe des Ventils erheblich. Es ist auch möglich, den Ventilhebel im zusammengeklappten Zustand vollständig in den Stecker zu stecken. Das Kunststoffgehäuse und das elastische Federelement machen den Einsatz von Stahlfedern überflüssig, verringert die axialen Abmessungen des Kegelventils und ermöglicht es, die Umweltverträglichkeit des Produkts zu erhöhen. Die Kosten für die Herstellung des Produkts werden gesenkt. Infolgedessen sinken die Kosten des Endprodukts für den Endverbraucher.

Der Dosierstecker funktioniert wie folgt:
Flasche 1 wird mit bekannten Methoden mit kohlensäurehaltigem Getränk gefüllt. Sie wird nach bekannten Methoden mit einem Dosierstopfen 2 verschlossen. Zunächst wird die Dichtigkeit des Behälters dadurch sichergestellt, dass der Dosierstopfen 2 fest auf den Flaschenhals 1 aufgeschraubt oder gepresst wird, und danach wird die Dichtheit des Behälters durch ein Ventilpaar sichergestellt. Je höher der Gasdruck in der Flasche 1 ist, desto stärker drückt er das Ventil 6 gegen den Sitz 5.

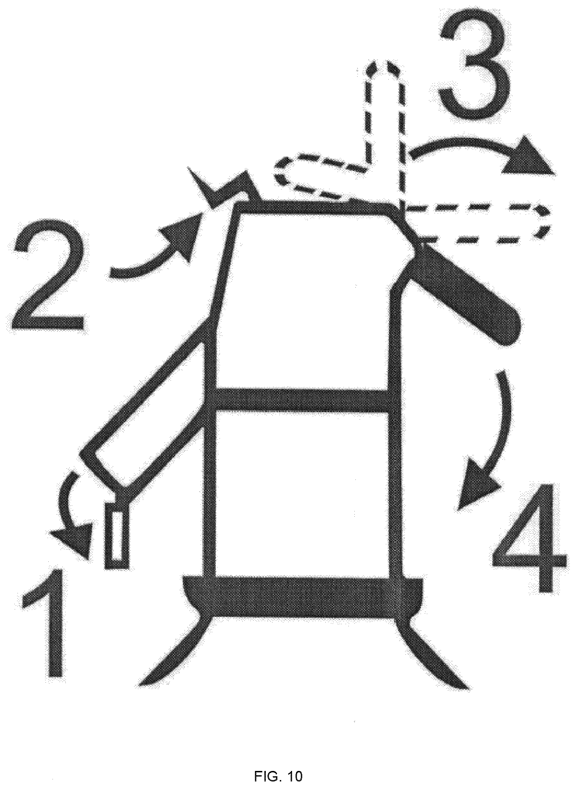

Fig. 10 zeigt schematisch die Gebrauchsanweisung für den auf einem Behälter montierten Spenderstopfen und Anleitungen mit Schritt-für-Schritt-Anweisungen:
1 - Öffnen Sie die Abdeckung
2 - Lassen Sie den Fang los
3 - Lösen Sie den gelenkigen Teil des Hebels
4 - Drücken Sie auf den klappbaren Teil des Hebels. Geben Sie die gewünschte Menge an kohlensäurehaltiger Flüssigkeit ab.

Der Druck des gelösten Kohlendioxids oder anderer Gase, die aus der Flüssigkeit freigesetzt werden, drückt die Flüssigkeit aus dem Inneren des Tanks nach außen, und zwar durch das Siphonrohr 7, das Ventil 6 und den Ablassstutzen 8 . Wenn der Hebel 12 losgelassen wird, bringt ihn ein elastisches Element in Form von Ranken 17 in seine ursprüngliche Position zurück. Die Stange 10 drückt das Ventil 6 gegen den Sitz 5. Der Austritt der Flüssigkeit aus Flasche 1 wird abgesperrt. Der Druck der im Getränk enthaltenen Gase drückt die weichelastische Platte des Ventils 6 gegen den Sitz 5 und dichtet diesen Kontakt ab.

Der Verbraucher drückt die Klappe erneut, wenn er ein weiteres Getränk wünscht. Der Verbraucher kann die gewünschte Menge des Getränks abgeben. Der Spenderstopfen wird industriell vollständig aus Kunststoff hergestellt. Das erlaubt die Verwendung zum Verkorken von kohlensäurehaltigen Getränken. Wie auch bei allen anderen kohlensäurefreien, alkoholarmen oder alkoholhaltigen Getränken ermöglicht es die Verwendung herkömmlicher Abfüllanlagen. Auf diese Weise wird das Ziel erreicht, das Korkdesign zu vereinfachen und es gleichzeitig erheblich billiger zu machen.

Gleichzeitig werden der Komfort und die Funktionalität von Flaschen bis hin zu großen Behältern erhöht, von 0,5 bis 3 Litern oder mehr. Das Gas wird in ihnen gespeichert, bis das Getränk vollständig verbraucht ist.

Es wurde eine Design- und Technologie-Dokumentation entwickelt. Die Herstellung und Abfüllung von PET-Flaschen mit Dosierkorken (Siphonverschluss) wird beherrscht.

### Informationsquellen, die bei der Prüfung berücksichtigt wurden:

1. Deutsches Patent Ns 1249111 , Ref. B 650 1/02, veröffentlicht 1967.
2. UdSSR Patent Ns 1535375, Ref. B 67D 1/10, Best. 07.01.90.
3. Eurasisches Patent Ns 020436, m. Kl. B67D 1/04 (2006.01)
   B65D 47/20 (2006.01), verkündet 2014.1 1.28 (Prototyp).

## Patentansprüche

1. Spenderkappe zur Aufbewahrung und Ausgabe von kohlensäurehaltigen Getränken aus einem Behälter mit:
- einem unteren Gehäuse Teil (4) mit einem Ablassstutzen (8),
- die Form der Innenfläche des unteren Gehäuse Teils (4) ist so gewählt, dass sie sich eng an den Hals des Behälters anschmiegt,
- ein oberes Gehäuse Teil (3), welcher mit dem unteren Gehäuse Teil (4) verbunden und ineinandergreifend ausgebildet ist
- das Gehäuse ist mit einem Steuerhebel (12) ausgestattet,
- einer Ventilvorrichtung und ein Rohr (7),
- das Rohr (7) ist mit dem unteren Teil (4) des Gehäuses verbunden,
- der Steuerhebel (12) ist als zweiteiliger Klapphebel ausgeführt,
- einem Tellerventil (6),
- das Tellerventil (6) kann mit einem Sitz (5) in Berührung gebracht werden,
- der Sitz (5) ist im unteren Gehäuse Teil (4) untergebracht.
- der Ventilschaft ist an einer Bohrung des zweiteiligen Klapphebels angelenkt, der mit dem oberen Gehäuse Teil (3) verbunden ist,
- die Hebelteile sind gelenkig miteinander verbunden,
- auf dem Klapphebel befindet sich ein rückstellbares elastisches Element,
- das obere Gehäuse Teil (3) ist mit Anschlägen (22) versehen,
- die Anschläge (22) verhindern dass der Klapphebel in einer eingeklappten Position gedrückt werden kann,
- eine Verriegelung (20) ist bereitgestellt, den Klapphebel in der eingeklappten Stellung zu halten,
- das untere Gehäuse Teil (4) der Spenderkappe ist mit einem Kontrollring (14) ausgestattet,
- das Ende des Gehäuses und das Ende des Kontrollrings (14) sind durch zwei parallele Streifen (15) miteinander verbunden, wobei die Streifen (15) entlang der Achse des Dosierers ausgerichtet sind,
- einige der Streifen werden zerstört, wenn der Spenderdeckel durch Abschrauben geöffnet wird,
- am Ablassstutzen (8) des Ventils ist ein Deckel (13) angebracht,
- das untere Gehäuse ist zusätzlich mit einem Zahn (16) ausgestattet, der so konstruiert ist, dass er einrastet, wenn ein Spenderdeckel mit Kontrollring (14) aufgeschraubt wird,
- der Zahn (16) verhindert, dass die Streifen (15) zwischen dem Kontrollring (14) und dem unteren Gehäuse Teil (4) ungewollt zusammenbrechen,
- am Steuerhebel (12) des oberen Gehäuse Teils (3) der Spenderkappe (2) ist das rückstellbare elastische Element angebracht,
- das rückstellbare elastische Element hat die Form von zwei flexiblen Spannglieder (17), die sich auf beiden Seiten des Tellerventils (6) befinden,
- am unteren Gehäuse Teil (3) der Spenderkappe (2) sind auf beiden Seiten des Tellerventils (6) Führungen (18) angebracht, um die Spannglieder (17) der der Spenderkappe (2) an dem Tellerventil (6) zu befestigen
- jede Führung (18) ist in Form eines Kanals ausgeführt,
- die Form des Querschnitts des Kanals entspricht derjenigen eines der flexiblen Spannglieder (17),
- der Kanal der Führung (18) befindet sich an der Stirnseite des zylindrischen Rohrs (7), das entlang der Achse der Spenderkappe (2) ausgerichtet ist,
- die Höhe des Kanals variiert stufenlos von einem Maximalwert an der Stelle, an der die flexiblen Spannglieder (17) in die rohrförmigen Führungen eingeführt werden, bis zu einem Minimalwert an der Stelle, an der sie austreten.

2. Spenderkappe nach Anspruch 1,
**dadurch gekennzeichnet,**
**dass** das Tellerventil einen Schaft und eine Scheibe aufweist, wobei sowohl die Ventilscheibe als auch der Ventilschaft aus einem einzigen Stück gefertigt sind, das aus elastischem, weichem Material besteht.

3. Spenderkappe nach Anspruch 1,
**dadurch gekennzeichnet,**
**dass** das Gelenk des zweiteiligen Klapphebels und ein Gelenk zur Befestigung des Klapphebels am oberen Gehäuse Teil (3), jeweils zusammen mit dem Körper und den Hebelteilen, spritzgegossen sind.

## Claims

1. Dispenser cap for storing and dispensing carbonated beverages from a container with:
- a lower housing part (4) with a discharge nozzle (8),
- the shape of the inner surface of the spout (8) is chosen so that it fits snugly against the neck of the container,
- an upper housing part (3), which is connected to and interlocking with the lower housing part (4)
- the housing is equipped with a control lever (12),
- a valve device and a tube (7),
- the tube (7) is connected to the lower part (4) of the housing,
- the control lever (12) is designed as a two-part folding lever,
- a plate valve (6),
- the plate valve (6) can be brought into contact with a seat (5),
- the seat (5) is housed in the lower housing part (4).
- the valve stem is pivoted at a bore of the two-part folding lever
which is connected to the upper housing part (3),
- the lever parts are hingedly connected to each other,
- a resettable elastic element is located on the folding lever (12),
- the upper housing part (3) is provided with stops (22),
- the stops (22) prevent the folding lever (12) from being pressed in a folded position,
- a locking mechanism (20) is provided to hold the folding lever (12) in the folded position,
- the lower housing part (4) of the dispenser cap is equipped with a control ring (14),
- the end of the housing and the end of the control ring (14) are connected by two parallel strips (15), with the strips (15) aligned along the axis of the dispenser,
- some of the strips are destroyed when the dispenser cap is opened by unscrewing,
- a cap (13) is attached to the discharge nozzle (8) of the valve,
- the lower housing is additionally equipped with a tooth (16) designed to engage when a dispenser cap with control ring (14) is screwed on,
- the tooth (16) prevents the strips (15) between the control ring (14) and the lower housing part (4) from collapsing unintentionally,
- the resettable elastic element is attached to the control lever of the upper housing part (3) of the dispenser cap (2),
- the resettable elastic element has the form of two flexible tension members (17) located on both sides of the plate valve (6),
- guides (18) are attached to the lower housing part (3) of the dispenser cap (2) on both sides of the plate valve (6) to fasten the tension members (17) of the dispenser cap (2) to the plate valve (6),
- each guide (18) is designed in the form of a channel,
- the shape of the cross-section of the channel corresponds to that of one of the flexible tension members (17),
- the channel of the guide (18) is located at the front end of the cylindrical tube (7), which is aligned along the axis of the dispenser cap (2),
- the height of the channel varies continuously from a maximum value at the point where the flexible tension members (17) are inserted into the tubular guides, to a minimum value at the point where they exit.

2. Dispenser cap according to claim 1,
**characterized in that**
the plate valve has a stem and a disc, whereby both the valve disc and the valve stem are made from a single piece consisting of elastic, soft material.

3. Dispenser cap according to claim 1,
**characterized in that**
the joint of the two-part folding lever (12) and a joint for attaching the folding lever (12) to the upper housing part (3) are each injection molded together with the body and the lever parts.

## Revendications

1. Bouchon distributeur pour la conservation et pour la sortie de boissons gazeuses d'un récipient avec :
- un boîtier inférieur (4) avec une tubulure d'évacuation (8) ;
- la forme de la surface intérieure du bec verseur (8) est choisi de sorte qu'elle enveloppe le cou du récipient ;
- un boîtier supérieur (3) relié au boîtier inférieur (4) et est formé de manière imbriqué
- le boîtier est muni d'un levier de commande (12) ;
- un dispositif de ventilation et un tuyau (7) ;
- le tuyau (7) est relié à la partie inférieure (4) du boîtier ;
- le levier de commande (12) est exécuté en tant qu'un levier rabattable en deux parties ;
- une soupape à champignon (6) ;
- la soupape à champignon (6) peut être mise en contact à l'aide d'une assise (5) ;
- l'assise (5) est logée dans le boîtier inférieur (4) ;
- la tige de soupape est installée au niveau d'un alésage du levier rabattable en deux parties qui est relié au boîtier supérieur (3) ;
- les éléments formant le levier sont reliés les uns aux autres de manière articulée ;
- un élément élastique réglable se situe au niveau du levier de commande (12) ;
- le boîtier supérieur (3) est muni de butées (22) ;
- les butées (22) empêchent que le levier de commande (12) peut être pressé dans une position repliée ;
- un verrouillage (20) est mis à disposition pour maintenir le levier de commande (12) dans la position repliée ;
- le boîtier inférieur (4) du bouchon distributeur est équipé d'un anneau de contrôle (14) ;
- l'extrémité du boîtier et l'extrémité de l'anneau de contrôle (14) sont reliées par le biais de deux bandes parallèles (15) où les bandes (15) sont alignées tout au long de l'axe du doseur;
- certaines bandes sont détruites si le capuchon distributeur est ouvert par le biais de dévissages ;
- un couvercle (13) est disposé au niveau du bec verseur (8) du ventilateur ;
- le boîtier inférieur est équipé par ailleurs d'une dent (16) qui est construite de la sorte qu'elle se verrouille si un capuchon distributeur est vissé avec l'anneau de contrôle (14) ;
- la dent (16) empêche que les bandes (15) s'effondrent entre l'anneau de contrôle (14) et le boîtier inférieur (4) de manière involontaire ;
- l'élément élastique réglable est installé au niveau du levier de commande du boîtier supérieur (3) du bouchon distributeur (2) ;
- l'élément élastique réglable présente la forme de deux organes de serrage flexibles (17) se situant au niveau des deux parties de la soupape à champignon (6) ;
- des guidages (18) sont installés au niveau du boîtier inférieur (3) du bouchon distributeur (2) sur les deux côtés de la soupape à champignon (6) pour fixer les organes de serrage (17) du bouchon distributeur (2) au niveau de la soupape à champignon (6);
- chaque guidage (18) est exécuté sous forme d'un canal;
- la forme de la coupe transversale du canal correspond à celle de l'une des organes de serrage flexibles (17) ;
- le canal du guidage (18) se situe au niveau de la face frontale du tuyau cylindrique (7) qui est aligné tout au long de l'axe du bouchon distributeur (2) ;
- la hauteur du canal varie en continu d'une valeur maximale à l'endroit où les organes de serrage flexibles (17) sont introduits dans les guidages tubulaires jusqu'à une valeur minimale à l'endroit où ils sortent.

2. Bouchon distributeur selon la revendication 1 est caractérisé de sorte que la soupape à champignon présente une tige et un disque où non seulement le disque de soupape mais aussi la tige de soupape sont produits à partir d'une seule pièce se composant d'un matériel élastique souple.

3. Bouchon distributeur selon la revendication 1 est caractérisé de sorte que la charnière du levier rabattable en deux parties (12) et une charnière pour la fixation du levier rabattable (12) au niveau du boîtier supérieur (3) sont moulées par injection respectivement en collaboration avec le corps et les éléments du levier.
